# EUROPEAN PATENT APPLICATION

(11) **EP 4 431 724 A1**
(43) Date of publication of application: **18.09.2024**
(21) Application number: 24161867.7
(22) Date of filing: 06.03.2024
(51) Int. Cl.: F03D 1/04, F03D 9/25, F03D 9/34, F03D 13/20

(54) **WIND POWER GENERATION SYSTEM, METHOD OF USING WIND POWER GENERATION APPARATUS, AND BUILDING IN WHICH WIND POWER GENERATION APPARATUS IS INSTALLED**

(30) Priority: 13.03.2023 JP 2023038478
(71) Applicant: Hitachi, Ltd., Tokyo 100-8280 (JP)
(72) Inventor: OTAKE, Yusuke, Tokyo, 100-8280 (JP); KAWAGUCHI, Daisuke, Tokyo, 100-8280 (JP); NAKATSU, Kinya, Tokyo, 100-8280 (JP)
(74) Representative: Manitz Finsterwald Patent- und Rechtsanwaltspartnerschaft mbB

(57) **Abstract**

According to the present invention, a wind power generation system includes: a wind power generation apparatus including a blade that rotates by receiving wind, a main shaft that transmits rotational energy of the blade, and a generator that converts the rotational energy into electricity; and a building in which the wind power generation apparatus is installed, in which the building includes a corner portion having a chamfered shape and two wall surfaces adjacent to the corner portion, and the blade is installed in an installation region including the corner portion and a surface having each of the two wall surfaces adjacent to the corner portion.

## Description

### BACKGROUND OF THE INVENTION

### 1. Field of the Invention

The present invention relates to a wind power generation system, a method of using a wind power generation apparatus, and a building in which the wind power generation apparatus is installed.

### 2. Description of the Related Art

One of efforts for global warming countermeasures is the use of renewable energy.

Therefore, local production and local consumption of electric power for securing renewable energy without passing through an electric power system has attracted attention.

As an approach to local production and local consumption, a wind power generation apparatus is being installed near a building.

In the vicinity of an artificial building represented by a building, wind collides with the artificial building to change characteristics of a wind flow. In particular, it is known that a separation phenomenon called separation of a wind flow occurs at a corner portion of an artificial building because the shape of the corner portion changes rapidly into a concave shape. Due to the change in characteristics of wind such as a separation phenomenon, a speed increase region where the wind speed increases and a speed reduction region where the wind speed decreases are generated around the artificial building.

On the other hand, the amount of power generation in the wind power generation apparatus depends on the wind speed. Therefore, in order to secure the amount of power generation, it is desirable to install a wind power generation apparatus at a place where the wind speed is high.

As a method of installing a wind power generation apparatus in an artificial building, for example, techniques disclosed in JP 2002-98037 A (Figs. 1 to 3, the paragraphs [0013] to [0015], and the like) and JP 2011-174448 A (Figs. 1 and 2, the paragraphs [0027] and [0028], and the like) are known.

### SUMMARY OF THE INVENTION

As described above, the separation phenomenon of the flow is a phenomenon in which wind flowing along an artificial building flows to be separated from a wall surface of the artificial building around a corner portion of the artificial building. Due to this phenomenon, both a region where the wind speed increases (speed increase region) and a region where the wind speed decreases (speed reduction region) are generated around the artificial building, and these regions are mixed.

Therefore, the wind power generation apparatus is desirably installed at a position of a high wind speed because the amount of power generation depends on the level of the wind speed.

Thus, around the artificial building, it is possible to expect a larger amount of power generation by installing the wind power generation apparatus in the speed increase region where the wind speed is high.

Therefore, in JP 2002-98037 A and JP 2011-174448 A, a method of installing a wind power generation apparatus around an artificial building is examined.

JP 2002-98037 A discloses a wind power generation method in which power is generated by a vertical-axis wind power generation apparatus disposed at a corner portion of a building, between adjacent buildings, or in the vicinity of the building. JP 2002-98037 A also discloses that straight blades of the vertical-axis wind power generation apparatus are disposed in a wind passage. JP 2002-98037 A also discloses a building in which a recess is provided at the corner portion, and the vertical-axis wind power generation apparatus is mounted in the recess.

In JP 2011-174448 A, an intermediate floor opened in four azimuthal directions is provided at a position above an intermediate position of a height of a skyscraper building. JP 2011-174448 A discloses a skyscraper building including a power generation system, the skyscraper building in which a wind power generation apparatus that generates power by energy of wind flowing into an intermediate floor is installed on the intermediate floor.

However, in the case of the wind power generation methods disclosed in JP 2002-98037 A and JP 2011-174448 A, although a high amount of power generation can be expected when the wind is blowing from the front of the artificial building, the amount of power generation may decrease depending on a change in a wind direction.

The present invention has been made in view of the above circumstances, and an object of the present invention is to provide a wind power generation system that is expected to generate a high amount of power even in various wind directions, a method of using a wind power generation apparatus, and a building in which the wind power generation apparatus is installed.

In order to achieve the above object, according to the present invention, a wind power generation system includes: a wind power generation apparatus including a blade that rotates by receiving wind, a main shaft that transmits rotational energy of the blade, and a generator that converts the rotational energy into electricity; and a building in which the wind power generation apparatus is installed, in which the building includes a corner portion having a chamfered shape and two wall surfaces adjacent to the corner portion, and the blade is installed in an installation region including the corner portion and a surface having each of the two wall surfaces adjacent to the corner portion.

According to the present invention, it is possible to provide a wind power generation system that is expected to generate a high amount of power even in various wind directions, a method of using a wind power generation apparatus, and a building in which the wind power generation apparatus is installed.

### BRIEF DESCRIPTION OF THE DRAWINGS

Fig. 1 is a top view of wind characteristics when wind flows from the front into an artificial building having no chamfered shape in the related art;
Fig. 2 is a top view of wind characteristics when the wind obliquely flows into the artificial building having no chamfered shape in the related art;
Fig. 3 is a top view of wind characteristics when the wind flows from the front into an artificial building in which a corner portion has a chamfered shape, and a chamfered portion is made into a corner round shape;
Fig. 4 is a top view of wind characteristics when the wind obliquely flows into the artificial building in which the corner portion has the chamfered shape, and the chamfered portion is made into the corner round shape;
Fig. 5 is a top view of a method of installing a wind power generation apparatus according to a first embodiment;
Fig. 6 is a three-dimensional view of the method of installing the wind power generation apparatus according to the first embodiment;
Fig. 7 is a top view of wind characteristics when the wind flows from the front into an artificial building in which the corner portion has the chamfered shape, and the chamfered portion is made into a corner cut shape;
Fig. 8 is a top view of wind characteristics when the wind obliquely flows into the artificial building in which the corner portion has the chamfered shape, and the chamfered portion is made into the corner cut shape;
Fig. 9 is a top view of a method of installing a wind power generation apparatus according to a second embodiment;
Fig. 10 is a top view of a method of installing a wind power generation apparatus according to a third embodiment; and
Fig. 11 illustrates a method of determining an installation position of a wind power generation apparatus according to a fourth embodiment.

### DESCRIPTION OF THE PREFERRED EMBODIMENTS

The present invention relates to a wind power generation apparatus installed in an artificial building. In particular, as a method of installing a wind power generation apparatus in an urban area, it is possible to achieve high power generation by effectively utilizing a change in wind, which is caused by the shape of an artificial building.

Embodiments of the present invention will be appropriately described below in detail with reference to the drawings.

In the description in this specification, a vertical-axis wind power generation apparatus will be described as the wind power generation apparatus according to the embodiments of the present invention. However, the present invention can be similarly applied to another type of vertical-axis wind power generation apparatus or a horizontal-axis wind power generation apparatus.

In addition, a rectangular parallelepiped shape will be described as an artificial building. However, as long as the shape has a corner portion, the cross-sectional shape of the artificial building in the present invention is not limited to a quadrangle, and may be a triangle, a pentagon, or a polygon in a top view. The height of the artificial building can be applied to both the lower layer and the higher layer.

The embodiments described below do not limit the inventions according to the claims, and all the elements and combinations described in the embodiments are not necessarily essential for the solution of the invention.

In the drawings, the same components are denoted by the same reference signs, and the detailed description of the repetitive parts will be omitted.

### <Artificial building 10 having no chamfered shape at corner portion 10k>

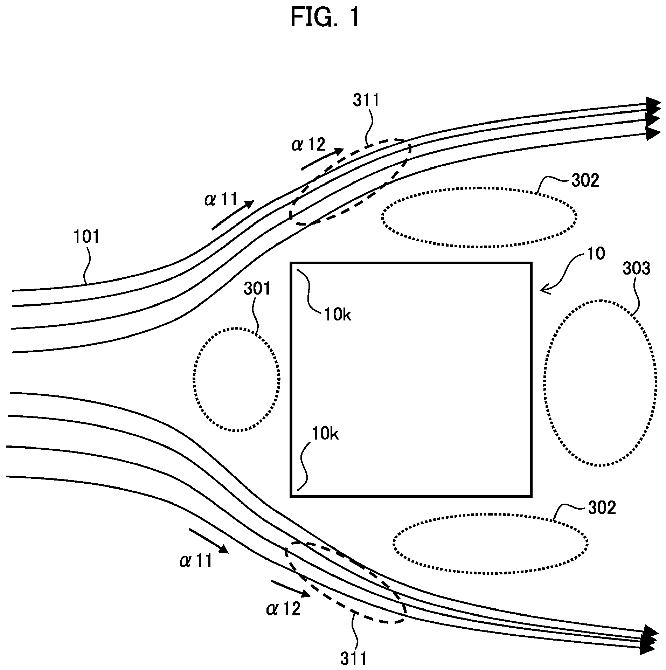

Fig. 1 illustrates a top view of wind characteristics when wind 101 flows into an artificial building 10 having no chamfered shape at a corner portion 10k from the front in the related art.

When the wind 101 flows into the artificial building 10 to hit the artificial building 10, the artificial building 10 acts as an obstacle, thereby generating a force for damming the wind 101. Therefore, the wind 101 flows to avoid the artificial building 10 (arrow α11 in Fig. 1).

Thus, in a windward side region of the artificial building 10, the flow wind speed decreases so that the wind 101 avoids the artificial building 10, and thus a speed reduction region 301 is generated.

Further, a separation phenomenon (arrow α12 in Fig. 1) of a flow in which the wind 101 separates from the artificial building 10 occurs near the corner portion 10k of the artificial building 10. That is, the wind 101 does not flow along the artificial building 10, but separates from the artificial building 10 based on a wind direction when passing by the corner portion 10k (arrow α12 in Fig. 1).

Therefore, a speed reduction region 302 in which the wind speed decreases due to the influence of the separation phenomenon of the wind 101 from the artificial building 10 is generated.

A speed reduction region 303 is generated on a leeward side of the artificial building 10, because the wind 101 is blocked by the artificial building 10, and thus does not flows into the artificial building 10.

On the other hand, as indicated by an arrow α12 in Fig. 1, the separated wind 101 merges with the surrounding wind 101 in the vicinity of the corner portion 10k of the artificial building 10, so that the kinetic energy (mv²/2) of the wind 101 increases. As a result, a speed increase region 311 in which the wind speed v of the wind 101 is high is generated outside the corner portion 10k.

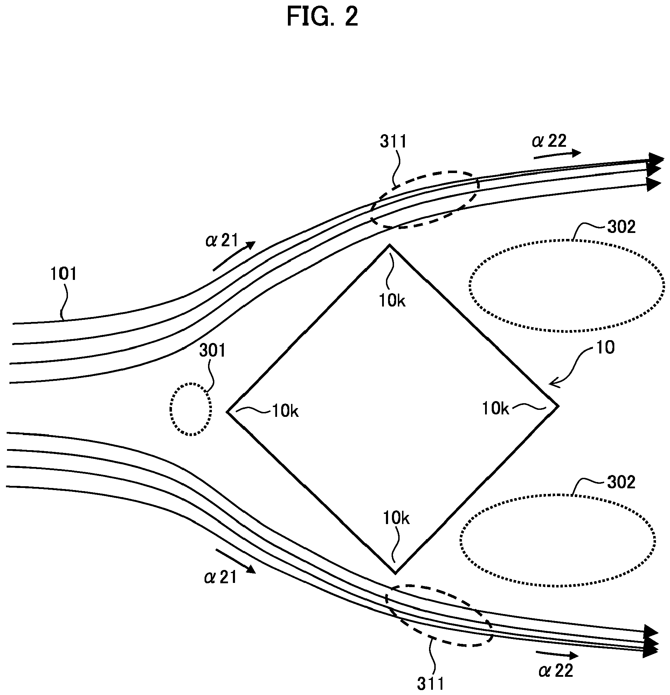

Fig. 2 illustrates a top view of wind characteristics when the wind 101 flows from an oblique direction into the artificial building 10 having no chamfered shape at the corner portion 10k in the related art, which is similar to Fig. 1.

Even when the wind 101 is blown from the oblique direction of the artificial building 10 (toward the corner portion 10k of the artificial building 10), the artificial building 10 acts as an obstacle against the wind 101 flowing in to hit the artificial building 10, thereby generating a force for damming the wind.

Therefore, the wind 101 flows to avoid the artificial building 10 (arrow α21 in Fig. 2). Therefore, in the windward side region of the artificial building 10, the flow wind speed decreases, and thus the wind 101 avoids the artificial building 10, and a speed reduction region 301 is generated.

Further, as indicated by an arrow α22 in Fig. 2, the separation phenomenon of the flow occurs at the corner portion 10k of the artificial building 10. Therefore, the wind 101 does not flow along the artificial building 10, but separates from the artificial building 10 based on a wind direction when passing by the corner portion 10k. Therefore, a speed reduction region 302 in which the wind speed decreases due to the influence of the separation phenomenon of the wind 101 from the artificial building 10 is generated.

On the other hand, the wind 101 separated at the corner portion 10k merges with the surrounding wind 101, so that the kinetic energy (mv²/2) of the wind increases, and thus a speed increase region 311 of the high wind speed v is generated outside the corner portion 10k.

As illustrated in Figs. 1 and 2, in the artificial building 10 having the corner portion 10k (see Figs. 1 and 2), most of the periphery of the artificial building 10 is the speed reduction regions 301 and 302 due to the separation phenomenon of the flow of the wind 101 from the artificial building 10, and thus, there are many regions where the wind speed v is low. Therefore, it has become clear that the vicinity of the corner portion 10k of the artificial building 10 is not suitable for installation of the wind power generation apparatus because the wind speed v is low and the kinetic energy is small.

### <<First embodiment>>

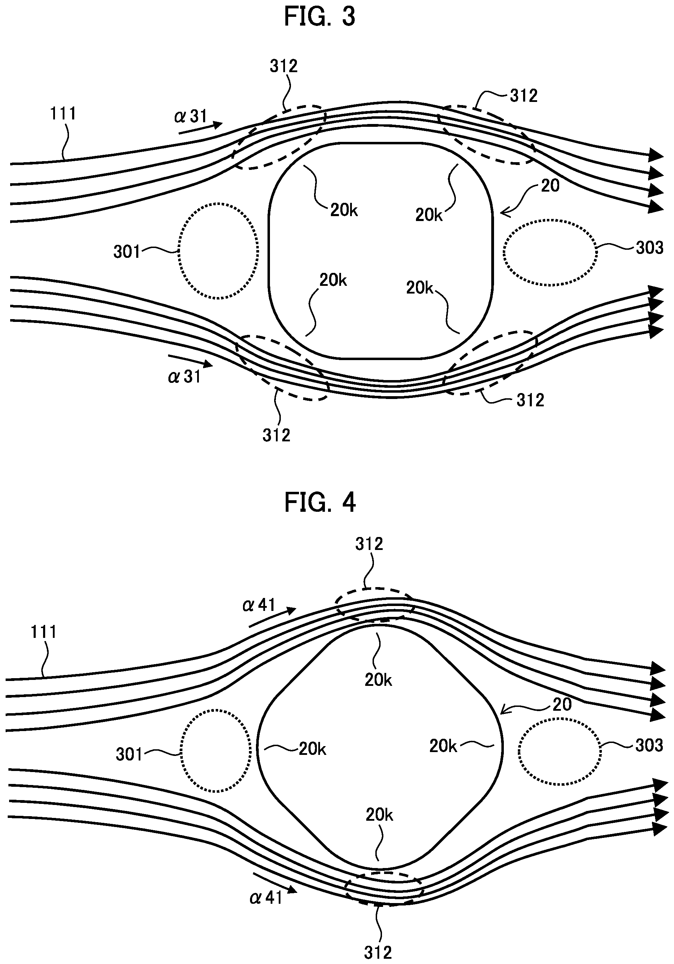

A method of installing the wind power generation apparatus according to the first embodiment will be described with reference to Figs. 3 to 6.

### <Case where corner portion 20k of artificial building 20 has chamfered corner round shape>

Fig. 3 illustrates a top view of wind characteristics when wind 111 flows from the front into an artificial building 20 in which a corner portion 20k is made into a chamfered corner round shape in the first embodiment.

As illustrated in Fig. 3, in the artificial building 20 of the first embodiment, the corner portion 20k is made into a chamfered corner round shape, an arc shape, or a shape having a curvature along which the wind 111 flows, in top view.

As illustrated in Fig. 3, when the wind 111 flows into the artificial building 20 to hit the artificial building 20, the artificial building 20 acts as an obstacle, thereby generating a force for damming the wind 111. Therefore, the point that the wind flows to avoid the artificial building 20 is similar to the artificial building 10 (see Fig. 1) having no chamfered shape. Therefore, in the windward side region of the artificial building 20, the wind speed (arrow α31 in Fig. 3) decreases so that the wind 111 is separated from the artificial building 20, and the speed reduction region 301 is generated.

On the other hand, in the artificial building 20, the corner portion 20k is made into a chamfered corner round shape, an arc shape, or a shape having a curvature along which the wind 111 flows.

As a result, an occurrence of the separation phenomenon of the flow of wind 111 from the artificial building 20 is suppressed, and the wind 111 flows along the artificial building 20 (near the artificial building 20).

Therefore, although the speed reduction region 303 is generated on the leeward side of the artificial building 20, the generation of the speed reduction region 302 (see Figs. 1 and 2) due to the separation phenomenon from the artificial building 20 is suppressed. On the other hand, at the corner portion 20k, the wind 111 that avoids the artificial building 20 merges with the surrounding wind 111, so that the kinetic energy (mv²/2) of the wind 111 increases, and the speed increase region 312 in which the wind speed v increases is generated.

Fig. 4 illustrates a top view of wind characteristics when the wind 111 flows obliquely (toward the corner portion 20k) into the artificial building 20 in which the corner portion 20k is made into a chamfered corner round shape.

When the wind 111 flows into the artificial building 20 (toward the corner portion 20k), the artificial building 20 acts as an obstacle, thereby generating a force for damming the wind. Therefore, the point that the wind 111 flows to avoid the artificial building 20 is similar to the artificial building 10 having no chamfered shape illustrated in Figs. 1 and 2.

Therefore, in the windward side region of the artificial building 20, the wind speed decreases, and the speed reduction region 301 (see Fig. 4) is generated.

On the other hand, in the artificial building 20, the corner portion 20k is made into a chamfered corner round shape, an arc shape, or a shape having a curvature along which the wind 111 flows, as illustrated in Fig. 4.

Due to the shape of the corner portion 20k, the occurrence of the separation phenomenon of the flow from the artificial building 20 is suppressed, and the wind 111 flows along the artificial building 20.

Therefore, although the speed reduction region 303 is generated on the leeward side of the artificial building 20, the generation of the speed reduction region due to the separation phenomenon from the artificial building 20 is suppressed. In addition, the wind 111 that avoids the artificial building 20 merges with the surrounding wind 111, so that the kinetic energy (mv²/2) of the wind 111 increases, the wind speed v increases, and the speed increase region 312 is generated in the vicinity of the corner portion 20k.

As illustrated in Figs. 3 and 4, by making the corner portion 20k into a chamfered corner round shape, that is, an arc shape or a shape having a curvature along which the wind 111 flows, the outside of the side wall of the artificial building 20, in particular, the vicinity of the corner portion 20k becomes a speed increase region 312 (see Figs. 3 and 4). Therefore, the wind power generation apparatus is disposed outside the vicinity of the corner portion 20k (see Figs. 3 and 4). As a result, the wind power generation apparatus can be installed in the speed increase region 312 where large kinetic energy (mv²/2) by a high wind speed v is obtained.

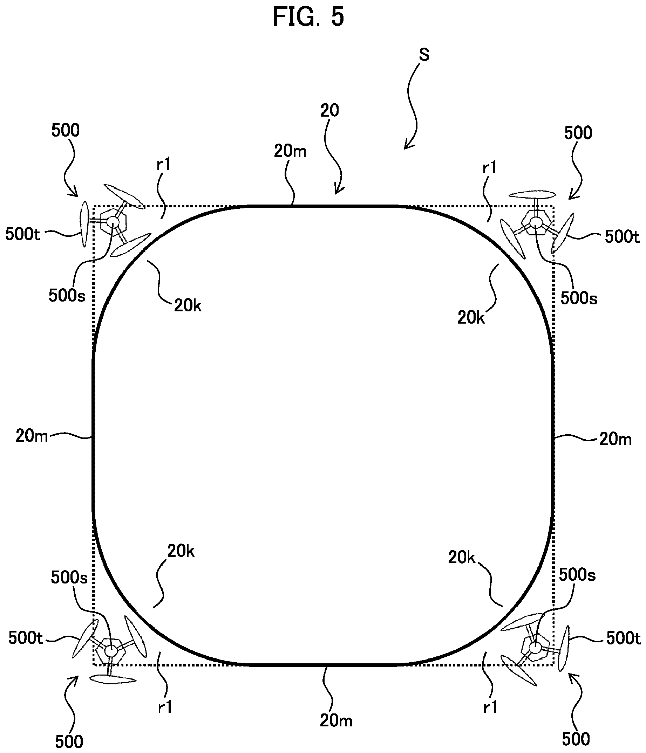

Fig. 5 illustrates a top view of the artificial building 20 in which a wind power generation apparatus 500 is installed.

The wind power generation apparatus 500 is installed outside the outer walls of all the four corner portions 20k of the artificial building 20. The corner portion 20k is made into a corner round shape which is a chamfered shape, an arc shape, or a shape having a curvature along which the wind 111 flows.

The artificial building 20 has a chamfered corner portion 20k and two wall surfaces 20m adjacent to the corner portion 20k.

The wind power generation apparatus 500 includes a blade 500t having a shape that rotates by receiving wind 111, a main shaft 500s that transmits rotational energy of the blade 500t, and a generator (not illustrated) that converts the rotational energy into electricity.

A wind power generation system S according to the first embodiment includes the wind power generation apparatus 500 including the blade 500t that rotates by receiving wind 111, the main shaft 500s that transmits rotational energy of the blade 500t, and the generator that converts the rotational energy into electricity, and an artificial building 20 (building) in which the wind power generation apparatus 500 is installed.

The blade 500t is installed in an installation region r1 including the corner portion 20k of the artificial building 20 and a surface having each of two wall surfaces 20m adjacent to the corner portion 20k.

In the wind power generation apparatus 500, kinetic energy of the wind 111 is converted into rotational energy for rotating the blade 500t, by using the blade 500t. The rotational energy of the blade 500t is converted into electric energy by the generator.

The kinetic energy (mv²/2) of the wind 111 changes depending on the wind speed v. That is, as the wind speed v increases, the kinetic energy of the wind 111 increases. Therefore, the electricity obtained from the wind power generation apparatus 500 also depends on the wind speed v. Therefore, in order to realize a larger amount of power generation, it is necessary to install the wind power generation apparatus 500 in a region where the wind speed v is high (a region where the kinetic energy of the wind 111 is high).

In the first embodiment, as illustrated in Figs. 3 and 4, the wind power generation apparatus 500 can be installed in the speed increase region 312 by utilizing the corner portion 20k of the artificial building 20.

As illustrated in Fig. 5, the wind power generation apparatus 500 is installed in the vicinity of all the four corner portions 20k. As a result, any wind power generation apparatus 500 is normally located in the speed increase region 312 regardless of the wind direction from which the wind is blown (see Figs. 3 and 4). Therefore, under any wind direction condition, the wind power generation apparatus 500 can continue a power generation operation in which the amount of power generation increases in the speed increase region 312 (see Figs. 3 and 4).

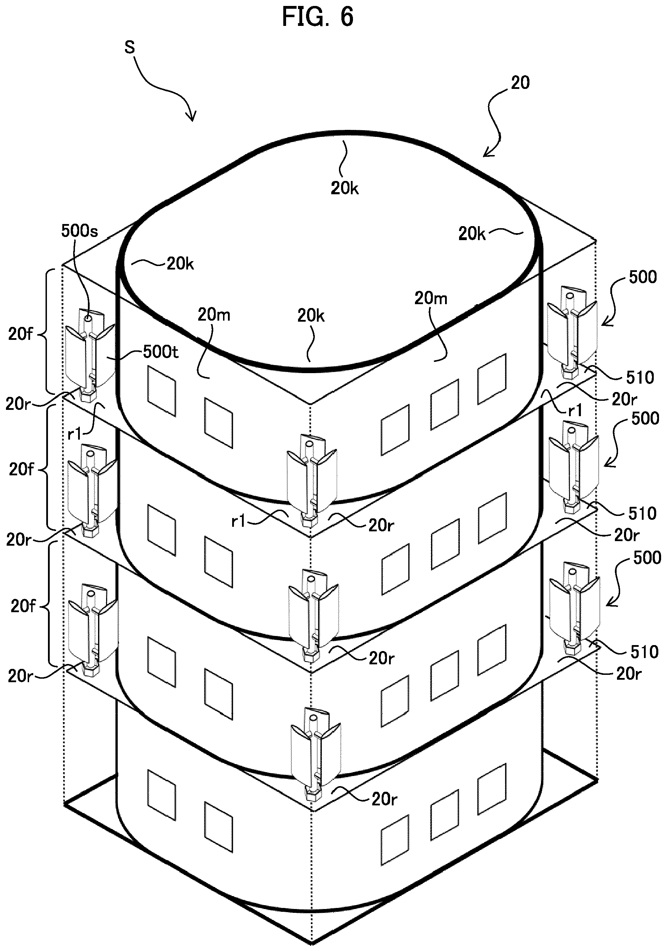

Fig. 6 illustrates a three-dimensional view of the artificial building 20 in which the wind power generation apparatus 500 is installed.

A plurality of wind power generation apparatuses 500 can be installed in the vertical direction in the artificial building 20. Therefore, in the artificial building 20 which is a high-rise building, it is possible to install a large number of wind power generation apparatuses 500 even in the altitude direction.

In addition, the wind power generation apparatus 500 is installed in accordance with the height of a structural support member 510 that supports each floor 20f in the artificial building 20. Since the wind power generation apparatus 500 is supported by the structural support member 510, the wind power generation apparatus 500, which is a heavy object, can be safely held on each floor 20f of the artificial building 20.

In other words, the artificial building 20 being the building includes the structural support member (protrusion) 510 in the installation region r1. The blade 500t is installed at the structural support member (protrusion) 510.

From the above description, according to the first embodiment, the wind power generation apparatus 500 can be installed in the speed increase region 312 (see Figs. 3 and 4), and a large number of wind power generation apparatuses 500 can be installed in the altitude direction (see Fig. 6). As a result, it is possible to realize a large amount of power generation from the artificial building 20.

Therefore, in the first embodiment, the shape of the corner portion 20k of the artificial building 20 is changed to a corner round shape, an arc shape, or a shape having a curvature along which the wind 111 flows, thereby suppressing the separation phenomenon of the flow. As a result, the wind power generation apparatus 500 expected to generate a high amount of power in various wind directions illustrated in Figs. 3 and 4 can be installed.

According to the first embodiment, the occurrence of the separation phenomenon at the corner portion 20k in the artificial building 20 is suppressed by utilizing the speed increase region 312 around the artificial building 20, and the speed reduction regions 301 and 303 around the artificial building 20 are reduced. Therefore, the wind power generation apparatus 500 can be more easily installed in the speed increase region 312.

Therefore, it is possible to provide the method of installing the wind power generation apparatus 500 expected to generate a higher amount of power.

### <<Second embodiment>>

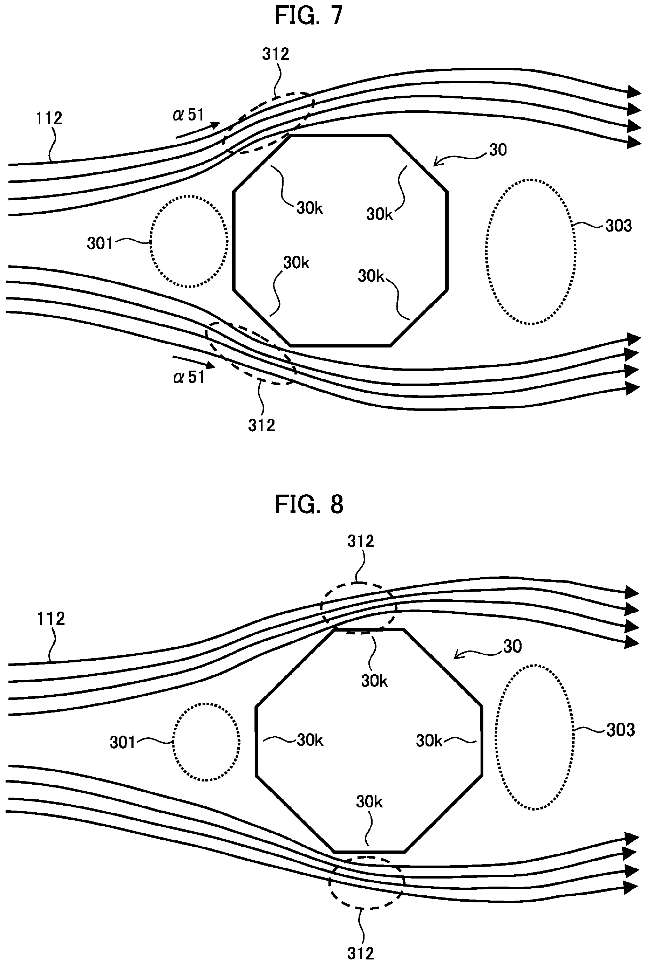

Next, a method of installing a wind power generation apparatus 500 according to a second embodiment will be described with reference to Figs. 7 to 9.

Fig. 7 illustrates a top view of wind characteristics when wind 112 flows from the front into an artificial building 30 in which a corner portion 30k is made into a chamfered corner cut shape in the second embodiment.

The second embodiment is different from the first embodiment in that, in the wind power generation apparatus 500 in the second embodiment, the notch shape of the corner portion 20k in the first embodiment illustrated in Figs. 3 and 4 is made into a corner cut shape.

As illustrated in Fig. 7, when the wind 112 flows into the artificial building 30 to hit the artificial building 30, the artificial building 30 acts as an obstacle, thereby generating a force for damming the wind. Therefore, the point that the wind 112 flows to avoid the artificial building 30 is similar to the artificial building 10 (see Figs. 1 and 2) having no chamfered shape and the artificial building 20 in which the corner portion 20k (see Figs. 3 and 4) is made into a chamfered corner round shape. Therefore, in the windward side region of the artificial building 30, the wind 112 escapes from the artificial building 30, thereby decreasing the wind speed and generating the speed reduction region 301.

In the artificial building 30 in the second embodiment, the corner portion 30k is made into a chamfered corner cut shape or a shape obtained by cutting the corner portion 30k in a plane. As a result, similarly to the artificial building 20 illustrated in Figs. 3 and 4, the occurrence of the separation phenomenon of the flow of wind 112 from the artificial building 30 is suppressed, and the wind 112 flows along the artificial building 30.

Therefore, as illustrated in Fig. 7, although the speed reduction region 303 is generated on the leeward side of the artificial building 30, the generation of the speed reduction region 302 (see Fig. 1) due to the separation phenomenon is suppressed.

On the other hand, at the corner portion 30k, the wind 112 (arrow α51 in Fig. 7) that avoids the artificial building 30 merges with the surrounding wind 112, so that the kinetic energy (mv²/2) of the wind 112 increases, and the speed increase region 312 in which the wind speed v increases is generated.

Fig. 8 illustrates a top view of wind characteristics when the wind 112 flows obliquely into the artificial building 30 in which the corner portion 30k is made into a chamfered corner cut shape in the second embodiment.

The wind 112 that obliquely hits the artificial building 30 (to the corner portion 30k of the artificial building 30) and flows into the artificial building 30 acts as an obstacle to generate a force for damming the wind 112. Therefore, the point that the wind flows to avoid the artificial building 30 is similar to the artificial building 10 having no chamfered shape illustrated in Figs. 1 and 2.

Therefore, as illustrated in Fig. 8, in the windward side region of the artificial building 30, the wind 112 escapes, thereby decreasing the wind speed and generating the speed reduction region 301.

On the other hand, in the artificial building 30, the corner portion 30k is made into a chamfered corner cut shape or a shape obtained by cutting the corner portion 30k in a plane, whereby the occurrence of the separation phenomenon of the flow from the artificial building 30 is suppressed, and the wind 112 flows along the artificial building 30.

Therefore, although the speed reduction region 303 (see Fig. 8) is generated on the leeward side of the artificial building 30, the generation of the speed reduction region 302 (see Fig. 1) due to the separation phenomenon from the artificial building 30 is suppressed.

On the other hand, the wind 112 that avoids the artificial building 30 merges with the surrounding wind 112, so that the kinetic energy of the wind 112 increases, and the speed increase region 312 of the wind 112 is generated in the vicinity of the corner portion 30k.

As illustrated in Figs. 7 and 8, when the corner portion 30k is made into a chamfered corner cut shape or a shape obtained by cutting the corner portion 30k in a plane, the speed increase region 312 is smaller than the corner portion 20k of the corner round shape illustrated in Figs. 3 and 4. However, compared with the artificial building 10 having a sharp angular corner portion 10k illustrated in Figs. 1 and 2, the occurrence of the separation phenomenon from the artificial building 30 is very suppressed.

Therefore, the outside of the side wall of the artificial building 30, particularly, the vicinity of the corner portion 30k becomes the speed increase region 312 (see Figs. 7 and 8).

Thus, even when the chamfered shape of the corner portion 30k illustrated in Figs. 7 and 8 is made into a corner cut shape or a shape obtained by cutting the corner portion in a plane, the wind power generation apparatus 500 is disposed in the vicinity of the corner portion 30k, so that the wind power generation apparatus 500 can be installed in the speed increase region 312 (see Figs. 7 and 8) where the high wind speed v is expected.

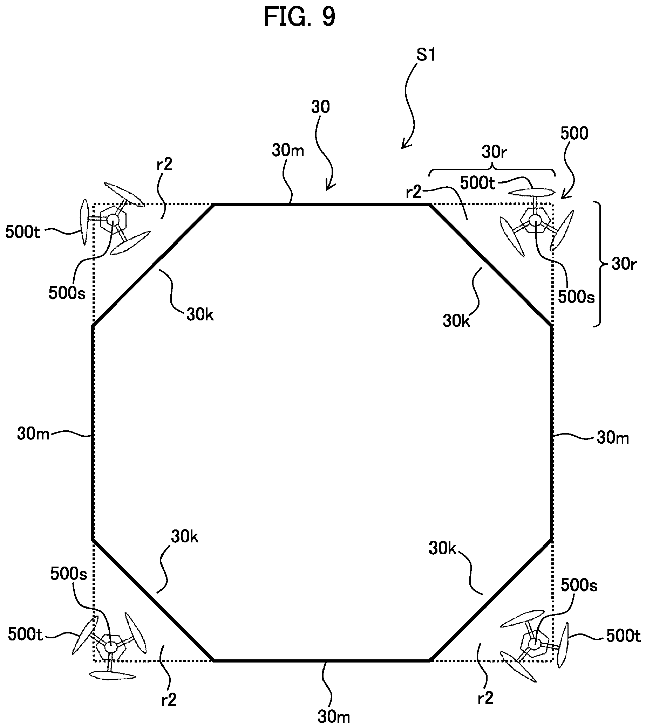

Fig. 9 illustrates a top view of the artificial building 30 in which the wind power generation apparatus 500 in the second embodiment is installed.

The wind power generation apparatus 500 in the second embodiment is installed outside the outer wall of the corner portion 30k of the artificial building 30 and on all four sides. The corner portion 30k is made into a corner cut shape or a chamfered shape obtained by cutting a sharp corner in a plane.

The artificial building 30 has a chamfered corner portion 30k and two wall surfaces 30m adjacent to the corner portion 30k.

A wind power generation system S1 according to the second embodiment includes the wind power generation apparatus 500 including the blade 500t that rotates by receiving wind 112, the main shaft 500s that transmits rotational energy of the blade 500t, and the generator that converts the rotational energy into electricity, and the artificial building 30 (building) in which the wind power generation apparatus 500 is installed.

In the second embodiment, as illustrated in Figs. 7 and 8, the wind power generation apparatus 500 is installed near the corner portion 30k of the artificial building 30, so that the wind power generation apparatus 500 can be installed in the speed increase region 312 (see Figs. 7 and 8).

The blade 500t is installed in an installation region r2 including the corner portion 30k of the artificial building 30 and a surface having each of two wall surfaces 30m adjacent to the corner portion 30k.

In addition, as illustrated in Fig. 9, by installing the wind power generation apparatuses 500 at all the four corner portions 30k, as illustrated in Figs. 7 and 8, any wind power generation apparatus 500 is normally located in the speed increase region 312 regardless of the wind direction from which the wind 112 is blown. As a result, the wind power generation apparatus 500 can continue the power generation operation with high power generation efficiency under any wind direction condition.

Also in the second embodiment, similarly to the first embodiment in Fig. 6, a plurality of wind power generation apparatuses 500 can be installed in the vertical direction. Therefore, it is possible to install a large number of wind power generation apparatuses 500 in a high-rise building.

Similarly to Fig. 6, the wind power generation apparatus 500 is installed in accordance with the height of the structural support member 510 of each floor in the artificial building 30, and the wind power generation apparatus 500, which is a heavy object, can be supported by the structural support member 510 and safely held in the artificial building 30.

As described above, according to the second embodiment, the wind power generation apparatus 500 can be installed in the speed increase region 312 (see Figs. 7 and 8), and a large number of wind power generation apparatuses 500 can be installed in the altitude direction. Therefore, it is possible to realize a large amount of power generation from the artificial building 30.

In addition, by making the corner portion 30k into a corner cut shape or a shape obtained by cutting the sharp corner portion in a plane, it is possible to construct the building in a linear structure. Thus, the wind power generation apparatus 500 can be more easily applied to the artificial building 30.

### <<Third embodiment>>

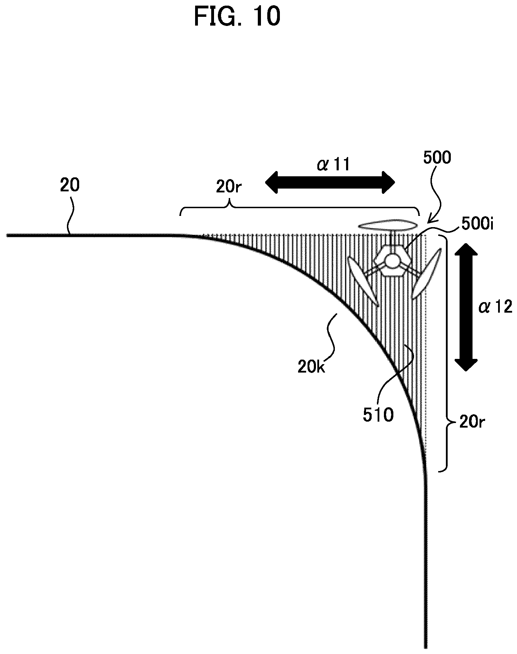

Fig. 10 illustrates a top view of a method of installing a wind power generation apparatus according to a third embodiment.

Next, a method of installing a wind power generation apparatus 500 according to a third embodiment will be described with reference to Fig. 10.

In the third embodiment, the wind power generation apparatus 500 is installed so as to have a changeable position (arrows α11 and α12 in Fig. 10) in a region 20r (shaded portion in Fig. 10) inside the chamfered shape of the corner portion 20k of the artificial building 20 (region 30r (see Fig. 9) inside the chamfered shape of the corner portion 30k).

As illustrated in Figs. 3, 4, 7, and 8, in the artificial buildings 20 and 30 having chamfered shapes at the corner portions 20k and 30k, the occurrence of the separation phenomenon of the wind 111 and the wind 112 at the corner portions 20k and 30k is suppressed, and the speed increase region 312 having a high wind speed is generated.

The speed increase region 312 has a characteristic that changes in accordance with the wind status flowing into the artificial buildings 20 and 30. The place most suitable for installation of the wind power generation apparatus 500 also changes in accordance with the wind 111 and the wind 112 flowing into the artificial buildings 20 and 30.

One of factors that change the characteristics of the wind 111 and the wind 112 flowing into the artificial buildings 20 and 30 is a change in the surrounding environment of the artificial buildings 20 and 30.

For example, in urban areas, construction of new buildings and demolition of old buildings are performed at any time. When a new building is constructed around the artificial buildings 20 and 30 in which the wind power generation apparatus 500 is installed, the wind 111 and the wind 112 affected by the new building flow into the artificial buildings 20 and 30, and the wind 111 and the wind 112 having characteristics different from conventional characteristics flow into the artificial buildings 20 and 30.

On the other hand, when buildings around the artificial buildings 20 and 30 in which the wind power generation apparatus 500 is installed are destroyed, the conventional function as a shielding object of the building is lost. Therefore, the characteristics of the wind 111 and the wind 112 from a direction in which there are the buildings are changed. Since the speed increase region 312 around the artificial buildings 20 and 30 changes due to a change in the characteristics of the wind 111 and the wind 112, the place suitable for installation of the wind power generation apparatus 500 also changes.

Another factor that changes the characteristics of the wind 111 and the wind 112 flowing into the artificial buildings 20 and 30 is the change in the wind direction. As can be seen by comparing Fig. 3 with Fig. 4 and Fig. 7 with Fig. 8, when the wind direction for the artificial buildings 20 and 30 changes, the positions of the speed increase region 312 and the speed reduction regions 301, 302, and 303 also change. Therefore, in the method of installing the wind power generation apparatus 500 in the third embodiment, the wind power generation apparatus 500 is installed with a position changing unit 500i (see Fig. 10) such that the position is changeable on the structural support member 510 in the region 20r (shaded portion in Fig. 10) at a corner round chamfered shape portion in the artificial building 20 (region 30r (see Fig. 9) inside the corner round chamfered shape of the corner portion 30k in the artificial building 30).

For example, as the position changing unit 500i that installs the wind power generation apparatus 500 to have a changeable position, lays a rail (not illustrated) on which the wind power generation apparatus 500 moves is laid on the structural support member 510, and the wind power generation apparatus 500 is fixed on the rail of the position changing unit 500i.

Alternatively, the wind power generation apparatus 500 is provided with the position changing unit 500i having legs, and the legs of the position changing unit 500i are portable instead of the rail structure. Other configurations may be adopted as long as the position of the wind power generation apparatus 500 can be changed.

As described above, according to the third embodiment, the position changing unit 500i changes the installation position of the wind power generation apparatus 500 in accordance with the surrounding environment such as the situation of the surrounding building.

With a configuration in which the wind power generation apparatus 500 is made movable and can change the position, it is possible to move and install the wind power generation apparatus 500 to a position where a higher amount of power generation is expected.

### <<Fourth embodiment>>

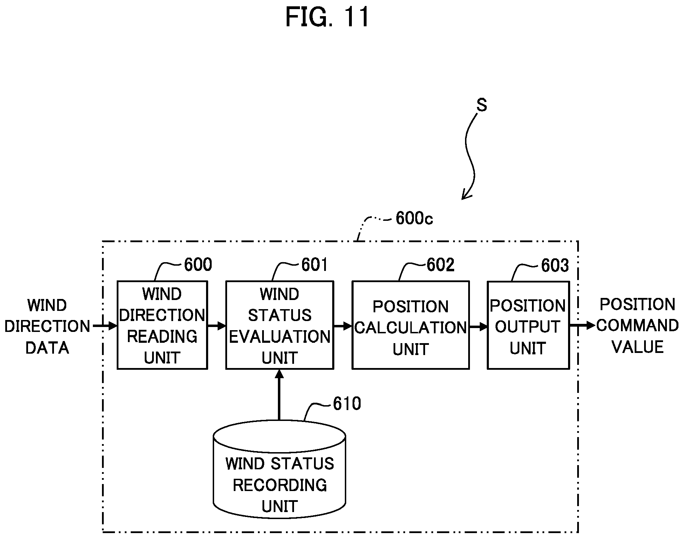

Fig. 11 is a block diagram for determining the installation position of a control unit 600c of a wind power generation apparatus 500 according to a fourth embodiment.

Next, a method of installing the wind power generation apparatus 500 according to the fourth embodiment will be described.

The wind power generation apparatus 500 in the fourth embodiment is an example of a control method of determining the installation position in accordance with the surrounding environment.

As described in the third embodiment, the speed increase region 312 around the artificial buildings 10 and 20 suitable for installation of the wind power generation apparatus 500 changes in accordance with the surrounding environment of the building and the wind directions of the winds 111 and the wind 112.

Therefore, in the fourth embodiment, the installation position of the wind power generation apparatus 500 is determined by using the control unit 600c in accordance with the surrounding environment and the wind direction.

### <Control unit 600c>

The control unit 600c that controls the position of the wind power generation apparatus 500 includes a wind direction reading unit 600, a wind status evaluation unit 601, a position calculation unit 602, a position output unit 603, and a wind status recording unit 610. The control unit 600c is realized by software stored in a computer such as a personal computer. The control unit 600c may be partially configured by hardware.

The wind direction reading unit 600 is an input unit that reads data of the wind direction provided by the Meteorological Agency, data of a wind vane installed on the roof, data of the wind direction distributed to the private sector, and the like.

In the wind status recording unit 610, wind status data of the speed increase region 312, the speed reduction regions 301, 302, and 303, and the like (see Figs. 3 and 7) is recorded by analysis in advance.

As the wind status data, an outline of a wind status field around the artificial buildings 20 and 30 for each wind direction, in particular, the speed increase region 312, the speed reduction regions 301, 302, and 303, and the like are recorded in the wind status recording unit 610. The wind status data recorded in the wind status recording unit 610 may be data measured on site, data reproduced by a reduced model such as a wind tunnel experiment prepared in advance, or a wind status simulation result based on numerical fluid dynamics.

The control unit 600c, which is a position control device, first takes in an inflow wind direction into the artificial buildings 20 and 30 in which the wind power generation apparatus 500 is installed in the wind direction reading unit 600. At this time, examples of wind direction data taken into the wind direction reading unit 600 include weather data and weather forecast data disclosed by the Meteorological Agency, wind direction data measured around the artificial buildings 20 and 30, and the like. In addition to these types of data, a known representative wind direction of a region where the artificial buildings 20 and 30 are constructed or a target season may be used.

The wind direction data taken by the wind direction reading unit 600 is transmitted to the wind status evaluation unit 601 and used to evaluate the wind status around the artificial buildings 20 and 30.

The wind status evaluation unit 601 reads wind status data around the artificial buildings 20 and 30 from the wind status recording unit 610 in addition to the wind direction data.

The wind status evaluation unit 601 reproduces the wind status (Figs. 3, 7, and the like) around the artificial buildings 20 and 30 from the wind direction data and the wind status data evaluated in advance.

Then, the position calculation unit 602 extracts the speed increase region 312 from the wind status data obtained by the wind status evaluation unit 601, and determines the installation position suitable for the wind power generation apparatus 500 in the speed increase region 312 (Figs. 3, 4, 7, and 8).

Finally, a command value of the installation position most suitable for installation of the wind power generation apparatus 500 in the chamfered shape (see Figs. 5 and 9) of the corner portions 20k and 30k of the artificial buildings 20 and 30 is output from the position output unit 603.

The position changing unit 500i (see Fig. 10) changes the position of the wind power generation apparatus 500 in accordance with the command value from the control unit 600c.

According to the fourth embodiment, it is possible to normally evaluate the speed increase region 312 suitable for installation of the wind power generation apparatus 500 in consideration of the influence of the change in wind status around the artificial buildings 20 and 30 caused in accordance with the surrounding environment and the change in the wind direction.

In addition, by changing the installation position of the wind power generation apparatus 500 in accordance with the output of the control unit 600c illustrated in Fig. 11, the wind power generation apparatus 500 can be installed in the speed increase region 312 (Figs. 3, 4, 7, and 8) where a higher amount of power generation is expected.

In addition, it is possible to provide the method of installing the wind power generation apparatus 500 in which a higher amount of power generation is expected by suppressing the occurrence of the separation phenomenon at the corner portions 20k and 30k in the artificial buildings 20 and 30 and utilizing the speed increase region 312 (Figs. 3, 4, 7, and 8) around the artificial buildings 20 and 30.

### <<Other embodiments>>

1. In the above embodiments, chamfered shapes such as a corner round shape and a corner cut shape are exemplified for the corner portions 20k and 30k, but a shape in which a flat surface and a curved surface are mixed may be used. Alternatively, the chamfered shape can be appropriately and freely selected as long as the corner portions 20k and 30k are provided so that the separation of the wind 111 and the wind 112 from the artificial buildings 20 and 30 is suppressed.
2. In the above embodiments, all the configurations of the wind power generation apparatus 500 may not be installed in the installation regions r1 and r2, and at least the blade 500t that receive wind may be installed in the installation regions r1 and r2.
3. The present invention is not limited to the configurations of the above-described embodiments and modifications, and various modifications and specific forms can be made within the scope of the appended claims.

## Claims

1. A wind power generation system comprising:
a wind power generation apparatus including
a blade that rotates by receiving wind,
a main shaft that transmits rotational energy of the blade, and
a generator that converts the rotational energy into electricity; and
a building in which the wind power generation apparatus is installed, wherein
the building includes a corner portion having a chamfered shape and two wall surfaces adjacent to the corner portion, and
the blade is installed in an installation region including the corner portion and a surface having each of the two wall surfaces adjacent to the corner portion.

2. The wind power generation system according to claim 1, wherein
the chamfered shape is a corner round shape in top view.

3. The wind power generation system according to claim 1, wherein
the chamfered shape is a corner cut shape in top view.

4. The wind power generation system according to any one of claims 1 to 3, wherein
the building includes a protrusion in the installation region, and
the blade is installed at the protrusion.

5. The wind power generation system according to claim 4, wherein
the protrusion includes a structural support member that supports a floor of the building, and
the blade is installed on the structural support member.

6. The wind power generation system according to any one of claims 1 to 3, further comprising:
a position changing unit that changes an installation position of the blade in the installation region.

7. The wind power generation system according to claim 6, further comprising:
a control unit that changes the installation position of the blade in accordance with a wind direction of the wind flowing into the building.

8. A method of using a wind power generation apparatus including a blade that rotates by receiving wind, a main shaft that transmits rotational energy of the blade, and a generator that converts the rotational energy into electricity, wherein
the wind power generation apparatus is installed in a building,
the building includes a corner portion having a chamfered shape and two wall surfaces adjacent to the corner portion, and
the blade is installed in an installation region including the corner portion and a surface having each of the two wall surfaces adjacent to the corner portion.

9. A building in which a wind power generation apparatus including a blade that rotates by receiving wind, a main shaft that transmits rotational energy of the blade, and a generator that converts the rotational energy into electricity is installed, wherein
the building includes a corner portion having a chamfered shape and two wall surfaces adjacent to the corner portion, and
the blade is installed in an installation region including the corner portion and a surface having each of the two wall surfaces adjacent to the corner portion.
